# EUROPEAN PATENT APPLICATION

(11) **EP 1 008 396 A1**
(43) Date of publication of application: **14.06.2000**
(21) Application number: 97934809.1
(22) Date of filing: 07.05.1997
(51) Int. Cl.: B09C 1/00, B09C 101/00

(54) **METHOD FOR CLEANING SOILS CONTAMINATED BY PETROLEUM PRODUCTS**

(71) Applicant: Kovalenko, Boris Mikhailovich, Moscow 115682 (RU); Kozlov, Sergei Ivanovich, Moscow, 121165 (RU); Usoshin, Vladimir Apollonovich, Moscow, 115372 (RU)
(72) Inventor: Kovalenko, Boris Mikhailovich, Moscow 115682 (RU); Kozlov, Sergei Ivanovich, Moscow, 121165 (RU); Usoshin, Vladimir Apollonovich, Moscow, 115372 (RU)
(74) Representative: Zellentin, Rüdiger, Dr.
(86) International application number: RU9700142
(87) International publication number: WO9850178

(57) **Abstract**

The invention relates to environmental control and can be used for cleaning soils polluted with recent or aged crude oil or petroleum product spills. The invention essentially relates to a method for cleaning soils polluted with petroleum products, and comprising mixing of the soil with thermally-split graphite, adding of water thereto and separating the sorbent floated to the surface together with the adsorbed petroleum products. The soil and sorbent can be mixed in situ using agricultural or road-building machines, as well as in mixing vessels. To accelerate the process, treatment of the aged petroleum products spills can include adding of an extractive agent such as kerosene, the application of cavitation action, or a combination thereof. The thermally-split graphite can be regenerated repeatedly by sublimating the sorbent-recovered petroleum products, by extracting or squeezing processes.

## Description

### Field of the Invention

The invention relates to the environmental control and can be suitably used to clean the soil polluted with spilled petroleum, petroleum products and other hydrocarbon liquids.

### Prior Art

Known is a method for cleaning the sand from petroleum with the use of heated water having surfactant additives (RU 2 049 871). This method is rather power-consuming and does not ensure a sufficient cleaning degree, particularly in case of cleaning from heavy petroleum products.

A method for separating petroleum products from solid substances by mixing a polluted solid material with glycolipids of microbiological origin is known from GB 2 031 015. In the slurry, as formed according to this method, the oil phase rises to the surface and is separated from the aqueous phase. Although providing an higher efficiency said method cannot be used on a large scale due to limited quantities of the used reagents.

The SU 1 749 340 discloses a method for cleaning soils from petroleum products, by applying hydrophobized sawdust on the polluted areas and subsequent adding of water, mixing the soil with the sawdust in water, and separation of the emerged sawdust that carries the sorbed petroleum products. The sawdust can be partially regenerated by squeezing for repeated use. The squeezed-out petroleum products can also be utilized after an appropriate processing.

A disadvantage of the latter method is a low absorption capacity of the used sorbent and a very limited number of recovery cycles of the hydrophobized sawdustuntill its adsorption efficiency is practically lost completely. Further, in order to pre-hydrophobize the sawdust, a certain quantity of petroleum products must be consumed.

### Disclosure of the Invention

The proposed method for cleaning the soil polluted by petroleum products includes the steps of mixing the soil with a hydrophobic sorbent, said sorbent being thermally-split (expanded) graphite, subsequent adding of water with simultaneous mixing, and separating the emerged sorbent together with the petroleum products absorbed by said sorbent.

Thermally-split graphite having a very low bulk density (2 - 10 kg/m³) is used in form of flakes or pellets, the volume ratio of soil to sorbent being 1 : 0.1 to 1 : 2. When mixed with the soil, the expanded graphite within 20 - 30 seconds absorbs an amount of petroleum products that ten times exceeds its own mass. For example, 1 kg of a sorbent based on thermally-split graphite having bulk density of 2.6 kg/m³ is capable of adsorbing up to 40 kg of the light petroleum products (petrol, diesel fuel), and up to 150 kg of the dark petroleum products (fuel oil), when completely saturated. To enhance the contact of the sorbent with the polluted soil, mixing of the soil with thermally-split graphite is carried out within about 3-5 minutes.

Depending on the amount of the polluted soil and the available technical possibilities, mixing of the soil with a sorbent can be carried out either directly in situ using agricultural or road-building machines, or in mixing vessels. In the first case it is required that special channels are prepared or local water reservoirs can be used. In the latter case the water can be delivered directly to a mixing vessel containing the mixed soil and sorbent.

After water is added to the mix, the cleaned sail sinks and the expanded graphite carrying the absorbed petroleum products floates to the surface, due to its hydrophobicity and a low density, thereby firmly retaining the adsorbed substances irrespective of the floating time.

In the case when the cleared soil remained polluted for a long time (aged bituminiferous spills), or when the pollutants represent the most heavy and dense oil fractions, then for the purpose to accelerate and facilitate the process the soil is preliminarily treated with an extractive agent-diluent or electric cavitation in the aqueous medium (Yutkin electro-hydraulic effect), or ultrasonic cavitation are performed, or by a combination of both techniques. Any suitable hydrocarbon liquid, e.g. kerosene) gas condensate or crude oil can be used as an extractive agent-diluent.

After removing the sorbent from the water surface, it can be used as an high-calorific fuel in a mixture- with fuel oil (Masut), or instead thereof, as the sorbent is a pure carbon (Graphite). The size of the sorbent particles does not impede the dispersion of the particles through nozzle openings.

When the sorbed petroleum products are sublimated in absence of oxygen, the sorbent is regenerated and it recovers its sorption properties, and can so be used again for soil cleaning. The efficiency of the regenerated sorbent does not decrease the initial one of the fresh sorbent, and in some cases the quality of a sorbent can be improved to some extent due to the formation of a thin layer of petroleum coke, which increases the sorption properties on the sorbing surface.

Another possible way to regenerate the used sorbent is to squeeze the same, for example by rolling, whereby a predominant portion of the absorbed petroleum products is released. The squeezed-out sorbent is subjected to the thermal regeneration for the repeated application. Thereupon a certain deterioration of the sorption properties of the thermally-split graphite is possible.

### The Best Modes to Embody the Invention

### Example 1

0.2 m³ of the construction-grade sand polluted by freshly-spilled motor oil was mixed with an equal volume of thermally-split graphite having a bulk density of 2.6 kg/m³, stirred in a mixing device for 2 minutes,and 0.4 m³ of water were added at continous stirring.

The sorbent crying the absorbed motor oil floated to the surface and was separated for further treatment. Clean sand and water remained in the mixing device.

The analysis results showed that the final content of hydrocarbons in the cleaned send was 0.2 vol%, the initial pollution degree of the soil being 48 vol%.

### Example 2

Under the conditions recited in Example 1, a sand-gravel-crushed rock mix was cleaned from a freshly-spilled oil. The initial and final contents of oil in the soil amounted, respectively, to 50 vol% and 0.05 vol%.

### Example 3

A sandy soil taken under a loading rack having aged bituminiferous spills, and having a content of petroleum products of 64 vol%, was mixed for 5 minutes with an extractive-agent (kerosene), the volume ratio of soil/kerosene was 2:1. Then, the mixing being continued for another 3 minutes, the expanded graphite was added in an amount that two times exceeded the mixture volume. Another 2 minutes of mixing proceeded and the water was added in an amount two times exceeding the volume of the soil/sorbent mixture.

The sorbent carrying the absorbed petroleum products floated to the water surface and was extracted with a mesh. The residual content of the petroleum products in the soil was 1.2 vol%.

The repeated treatment of the same soil, whereby instead of adding the extractive agent, electric cavitation on the basis of Yutkin electro-hydraulic effect was applied to the mixture for 1 minute, which decreased the residual content of the petroleum products in the soil to 0.1 vol%.

### Example 4

The expanded graphite used as the sorbent in Example 2 was regenerated by sublimating the sorbed oil, and then mixed with a loam soil polluted with spilled dark petroleum products (the pollution degree amounted to 50 vol%). After the treated soil area was flooded by water, the sorbent floated to the surface and was separated for further treatment. The residual content of hydrocarbons in the soil was 0.6 vol%.

### Industrial Applicability

The proposed method is most efficient for cleaning sandy, gravelly and stony soils, in particular beaches, loamy and sand-loamy soils, as welt as for cleaning gravel and crushed rook. The method is less suitable for cleaning high-humic soils or soils having an high content of clay, as said clay soils when being mixed with water, polluting hydrocarbons and extractive agents can form a stable emulsion, so that the separation of petroleum products is rather diffcult.

## Claims

1. A method for cleaning a soil polluted with petroleum products, comprising mixing of the soil with a hydrophobic sorbent, subsequent adding of water and separation of the floated sorbent, **characterised in that** thermally-split graphite is used as sorbent.

2. The method as claimed in claim 1, **characterised in that** the thermally-split graphite is used in the form of flakes or pellets having a bulk density of 2-10 kg/m³.

3. The method as claimed in claim 1, **characterised in that** the volume ratio of the soil to the thermally-split graphite is 1 : 0.1 to 1 : 2, the time of mixing the soil with the thermally-split graphite being 3-5 minutes.

4. The method as claimed in claim 1, **characterised in that** during mixing the soil and the thermally-split graphite, an extractive agent is added and/or electric cavitation or ultrasonic cavitation are effected to the mixture.

5. The method as claimed in claims 1-4, **characterised in that** the sorbent is regenerated by thermal sublimation of the absorbed petroleum products, and that said sorbent is repeatedly used for cleaning a soil.

6. The method as claimed in claims 1-4, **characterised in that** the spent thermally-split graphite is squeezed and the petroleum products are separated, and the squeezed-out sorbent, after being subjected to a thermal treatment, is repeatedly used for cleaning a soil.
